# EUROPÄISCHE PATENTSCHRIFT

(11) **EP 3 222 399 B1**
(45) Veröffentlichungstag und Bekanntmachung des Hinweises auf die Patenterteilung: **07.08.2019**
(21) Anmeldenummer: 16161875.6
(22) Anmeldetag: 23.03.2016
(51) Int. Cl.: B29C 43/40, B29C 45/14, B26F 1/02, B26F 1/40, B29C 69/00, B29L 31/30, B29K 105/12, B29K 23/00, B29K 311/00, B26F 1/44, B26D 7/18

(54) **VORRICHTUNG UND VERFAHREN ZUM HERSTELLEN EINES FORMPRESSTEILS, WELCHES MINDESTENS EINEN DURCHBRUCH AUFWEIST**
DEVICE AND METHOD FOR PRODUCING A PRESS-MOULDED PART HAVING AT LEAST ONE PERFORATION
DISPOSITIF ET PROCEDE DE FABRICATION D'UN OBJET MOULE PRESENTANT AU MOINS UNE PERCEE

(43) Veröffentlichungstag der Anmeldung: 27.09.2017
(73) Patentinhaber: SMP Deutschland GmbH, 79268 Bötzingen (DE)
(72) Erfinder: Pignard, Pierre, 79268 Bötzingen (DE)
(74) Vertreter: Westphal, Mussgnug & Partner Patentanwälte mbB

(56) Entgegenhaltungen:
- EP-A1- 2 327 528
- DE-A1- 4 317 235
- DE-A1- 10 315 231
- DE-A1- 19 916 023
- DE-A1-102013 109 616
- FR-A1- 2 735 063
- JP-A- H 091 572
- JP-A- 2003 062 846
- JP-A- 2003 340 863

## Beschreibung

Die vorliegende Erfindung betrifft eine Vorrichtung und ein Verfahren zum Herstellen eines Formpressteils, welches mindestens einen Durchbruch aufweist.

Im Rahmen dieser Anmeldung soll es sich beim Formpressteil insbesondere um ein Verkleidungsbauteil eines Kraftfahrzeugs, beispielsweise für den Innenraum, handeln. Bei Verkleidungsbauteilen auf Basis von naturfaserverstärkten Kunststoffen (NFK) werden Naturfasern auf Basis nachwachsender Rohstoffe als Verstärkungsmaterial in eine Polymermatrix eingebettet. Derartige Verkleidungsbauteile sind besonders wegen ihrer Umweltverträglichkeit, des Leichtbaupotentials, des Crashverhaltens und der Formstabilität interessant. Eine besondere Ausbildung derartiger faserverstärkter Verkleidungsbauteile sind NFPP-Formpressteile (Naturfaser + Polypropylen).

In vielen Fällen weisen die als Formpressteile hergestellten Verkleidungsbauteile einen oder mehrere Durchbrüche auf, um dort Funktionselemente wie Befestigungselemente und/oder Aufnahmeabschnitte bereitstellen zu können. Diese Funktionselemente werden spritzgegossen, so dass die Funktionselemente auch relativ komplexe Formen aufweisen können. Beim Erstarren der Funktionselemente verbinden diese sich mit dem übrigen Verkleidungsbauteil.

Bei den bislang durchgeführten Standardprozessen zum NFPP-Hinterspritzen wird eine Vorrichtung zum Herstellen des Formpressteils, welche ein Oberwerkzeug und ein Unterwerkzeug aufweist, dadurch geöffnet, dass das Oberwerkzeug und das Unterwerkzeug voneinander weg bewegt werden, so dass ein Zwischenraum zwischen den beiden Werkzeugen entsteht. Der Zwischenraum wird so gewählt, dass eine Matte (Rohling) im heißen Zustand in den Zwischenraum eingelegt werden kann, ohne an das Ober- oder Unterwerkzeug anzustoßen. Der Rohling ist bereits vor dem Einlegen mit dem Durchbruch versehen worden. Anschließend wird die Vorrichtung dadurch geschlossen, dass das Oberwerkzeug und das Unterwerkzeug aufeinander zu bewegt werden. Infolgedessen wird der Rohling umgeformt und nach einer gewissen Verzögerungszeit im Bereich des Durchbruchs hinterspritzt, um den Rohling beispielsweise mit den oben erwähnten Funktionselementen zu versehen.

Nachteilig an dieser Vorgehensweise ist, dass der Rohling sehr präzise in der Vorrichtung positioniert werden muss, um einen reproduzierbaren Übergang und eine sichere Verbindung zwischen dem Rohling und spritzgegossenen Funktionselementen zu gewährleisten und die Ausschussrate gering zu halten. Eine Positionierung mit der genötigten Präzision ist jedoch zeit- und kostenintensiv.

Um die Problematik der exakten Positionierung etwas zu entschärfen, kann der Durchbruch, sofern die Geometrie sowie die Qualitätsanforderungen des Formpressteils dies zulassen, größer als nötig ausgeführt werden, wodurch auch der spritzgegossene Anteil am Formpressteil vergrößert wird. Da hierdurch jedoch das Gewicht des Formpressteils steigt, wird ein wichtiger Vorteil der Verwendung von Formpressteilen der eingangs genannten Art, nämlich eben das geringe Gewicht, zumindest teilweise wieder zunichte gemacht.

Die DE 10 2014 205 896 A1 zeigt eine Vorrichtung, mit welchem ein Formpressteil aus Organoblech innerhalb derselben Vorrichtung geformt und mit Hilfe von Dörnern ein Anzahl von Löchern gefertigt werden kann. Diese Löcher können anschließend umspritzt werden. Da mit den Dörnern nur sehr kleine Löcher gefertigt werden können, sind die Einsatzmöglichkeiten dieser Vorrichtung sehr begrenzt.

Weitere Vorrichtungen zum Herstellen eines Formpressteils sind unter anderem aus der DE 10 2013 109 616 A1, der DE 103 15 231 A1 und der DE 43 17 235 A1 bekannt. Aus der Patentanmeldung FR 2 735 063 A1 ist ferner eine Vorrichtung gemäß dem Oberbegriff des Anspruchs 1 bekannt.

Aufgabe einer Ausführungsform der vorliegenden Erfindung ist es daher, eine Vorrichtung und ein Verfahren anzugeben, mit welchen Formpressteile der eingangs genannten Art auf kostengünstige, sichere und reproduzierbare Weise hergestellt werden können, ohne dass der Rohling exakt positioniert werden muss. Zudem soll die Anzahl der Arbeitsschritte, die zur Herstellung des Formpressteils notwendig sind, gering gehalten werden.

Diese Aufgabe wird mit den in den Ansprüchen 1 und 6 angegebenen Merkmalen gelöst. Vorteilhafte Ausführungsformen sind Gegenstand der Unteransprüche.

Eine Ausführungsform der Erfindung betrifft eine Vorrichtung zum Herstellen eines Formpressteils, welches mindestens einen Durchbruch aufweist, umfassend ein Oberwerkzeug, ein Unterwerkzeug, wobei das Oberwerkzeug relativ zum Unterwerkzeug, das Unterwerkzeug relativ zum Oberwerkzeug oder das Oberwerkzeug und das Unterwerkzeug relativ zueinander bewegbar sind, um das Formpressteil in die gewünschte Form zu bringen, das Oberwerkzeug oder das Unterwerkzeug einen Stempel zum Bereitstellen des Durchbruchs des Formpressteils bildet und der Stempel einen Aufnahmeabschnitt und einen Stempelabschnitt umfasst, der Stempelabschnitt wahlweise mit einer Verriegelungseinrichtung am Oberwerkzeug oder am Unterwerkzeug befestigbar ist, so dass der Stempelabschnitt gemeinsam mit dem Oberwerkzeug oder dem Unterwerkzeug bewegbar oder voneinander trennbar sind und der Stempelabschnitt mit dem Aufnahmeabschnitt eine Spritzgusskavität bildet, wenn der Stempelabschnitt am Aufnahmeabschnitt befestigt ist.

Ein wesentlicher Unterschied zu bekannten Vorrichtungen zum Herstellen eines Formpressteils, die häufig auch als Presswerkzeuge bezeichnet werden, ist, dass der Durchbruch mit dem Stempelabschnitt erzeugt wird, indem das Oberwerkzeug und das Unterwerkzeug aufeinander zu bewegt werden, nachdem der Rohling in die Vorrichtung eingelegt worden ist. Eine exakte Positionierung ist daher nicht notwendig. Die Spritzgusskavität wird von einem Hohlraum zwischen dem Stempelabschnitt und dem Aufnahmeabschnitt gebildet. Der Stempelabschnitt und der Aufnahmeabschnitt sind dabei so gestaltet, dass dann, wenn das Oberwerkzeug und das Unterwerkzeug maximal weit aufeinander zu bewegt worden sind, sich der Rohling den seitlichen Öffnungen der Spritzgusskavität zumindest teilweise anschließt, so dass der flüssige Kunststoff in Kontakt mit dem Rohling treten kann. Die Funktionselemente können direkt an den Rohling angespritzt werden, indem die Spritzgusskavität mit einem spritzfähigen Kunststoff gefüllt und dieser ausgehärtet wird. Der Kontakt zwischen den Funktionselementen und dem Rohling besteht ausschließlich oder nahezu ausschließlich an der Grenzfläche des Durchbruchs, der durch das Stanzen geschaffen worden ist. Dadurch, dass der Aufnahmeabschnitt und der Stempelabschnitt wahlweise voneinander getrennt werden können, kann das fertige Formpressteil mit den Funktionselementen von der Spritzgusskavität dadurch entformt werden, dass der Stempelabschnitt und der Aufnahmeabschnitt voneinander weg bewegt werden. Die Verriegelungseinrichtung wird entsprechend aktiviert.

Mit der Vorrichtung gemäß dieser Ausführungsform ist es folglich möglich, das gewünschte Formpressteil zu fertigen, ohne dass eine exakte Positionierung des Rohlings innerhalb der Vorrichtung notwendig ist. Zudem ist es nicht notwendig, das Formpressteil in ein weiteres Werkzeug zu überführen, um die spritzgegossenen Funktionselemente zu fertigen und mit dem Formpressteil zu verbinden. Die Herstellung des Formpressteils wird hierdurch deutlich vereinfacht und verkürzt, wodurch die Herstellungskosten sinken. Zudem können großflächige Durchbrüche gefertigt und die Funktionselemente an die so geschaffenen Grenzflächen angespritzt werden, beispielsweise Öffnungen zur Aufnahme von Lautsprechern.

In einer alternativen Ausführungsform kann der Aufnahmeabschnitt vom Oberwerkzeug oder vom Unterwerkzeug gebildet werden. Üblicherweise wird bei Presswerkzeugen das Oberwerkzeug bewegt, während das Unterwerkzeug stationär ausgebildet ist. Es ist aber auch möglich, das Unterwerkzeug bewegbar und das Oberwerkzeug stationär auszuführen oder beide Werkzeuge bewegbar auszuführen. Die Entscheidung hierüber orientiert sich an den Randbedingungen des jeweiligen Einzelfalls. Dabei kann es auch zielführend sein, das Oberwerkzeug neben dem Unterwerkzeug anzuordnen, so dass die gewählte Bezeichnung der beiden Werkzeuge nicht als Begrenzung auf eine bestimmte Anordnung relativ zueinander zu verstehen ist. In diesem Fall bewegen sich das Oberwerkzeug und das Unterwerkzeug horizontal aufeinander zu und voneinander weg. Unabhängig hiervon wird jedoch der Aufbau der Vorrichtung dadurch vereinfacht, dass der Aufnahmeabschnitt vom Oberwerkzeug oder vom Unterwerkzeug gebildet wird. Befestigungsmittel oder Fertigungstoleranzen sind nicht zu berücksichtigen.

In einer anderen Ausführungsform kann jedoch der Aufnahmeabschnitt vom Oberwerkzeug oder vom Unterwerkzeug lösbar ausgeführt werden. Auch wenn hierdurch im Vergleich zur in das jeweilige Werkzeug integrierten Lösung erhöhte Fertigungskosten entstehen, können diese sich insofern lohnen, als dass der Aufnahmeabschnitt relativ einfach aus dem Ober- oder Unterwerkzeug entnommen und ausgetauscht werden kann. Dies kann beispielsweise dann vorteilhaft sein, wenn der Aufnahmeabschnitt beschädigt worden ist oder wenn Funktionselemente einer anderen Form an den Rohling angespritzt werden sollen. Im letzteren Fall ist es daher nicht notwendig, das komplette Oberwerkzeug auszutauschen, sondern nur den Stempel mit dem Aufnahmeabschnitt und dem Stempelabschnitt. Die Flexibilität der Vorrichtung wird hierdurch deutlich gesteigert.

In einer alternativen Ausgestaltung umfasst die Vorrichtung eine Auswurfeinrichtung zum Auswerfen von beim Bereitstellen des Durchbruchs anfallenden Abfallstücken. Wie eingangs erwähnt, wird der Durchbruch erst dann gefertigt, wenn der Rohling bereits in die Vorrichtung eingelegt worden ist. Folglich befindet sich das entsprechende, beim Fertigen des Durchbruchs anfallende Abfallstück in der Vorrichtung und muss entfernt werden, um den weiteren Betrieb der Vorrichtung zu gewährleisten. Die Abfallstücke können zwar manuell entnommen werden, allerdings ist das Abfallstück je nach Form des Formpressteils schwer zugänglich. Mit der Auswurfeinrichtung kann das Auswerfen automatisiert oder zumindest deutlich vereinfacht werden, so dass die zum Auswerfen des Abfallstücks benötigte Zeit gering gehalten wird. Hierdurch kann die Vorrichtung gut ausgelastet und wirtschaftlich betrieben werden.

Gemäß einer weiteren Ausgestaltung weist das Oberwerkzeug oder das Unterwerkzeug einen Riegel zum Fixieren des Stempelabschnitts auf. Je nachdem, ob der Aufnahmeabschnitt vom Oberwerkzeug oder vom Unterwerkzeug gebildet wird oder als separates Bauteil mit dem Oberwerkzeug oder dem Unterwerkzeug verbunden ist, ist es während der Fertigung des Formpressteils aus Sicherheitsgründen von Vorteil, den Stempelabschnitt am jeweils gegenüberliegenden Werkzeug zu fixieren, um ihn vom Aufnahmeabschnitt zu trennen. Der Riegel sorgt dafür, dass der Stempelabschnitt am gewünschten Werkzeug fixiert ist. Hierdurch wird verhindert, dass der Stempelabschnitt unkontrolliert am Aufnahmeabschnitt hängen bleibt, wodurch der Fertigungsprozess gestört werden kann.

Eine Ausführung der Erfindung betrifft ein Verfahren zum Herstellen eines Formpressteils, welches mindestens einen Durchbruch aufweist, mit einer Vorrichtung nach einer der zuvor beschriebenen Ausgestaltungen, umfassend folgende Schritte:
- Aufeinander zu Bewegen des Oberwerkzeugs und des Unterwerkzeugs derart, dass der Stempelabschnitt am Aufnahmeabschnitt befestigbar ist,
- Betätigen der Verriegelungseinrichtung derart, dass der Stempelabschnitt am Aufnahmeabschnitt befestigt ist,
- Bewegen des Oberwerkzeugs und/oder des Unterwerkzeugs in eine Position, in welche sie einen ersten Zwischenraum bilden,
- Einlegen eines Rohlings des Formpressteils in den ersten Zwischenraum,
- Aufeinander zu Bewegen des Oberwerkzeugs und des Unterwerkzeugs zum Umformen des Rohlings mit dem Oberwerkzeug und dem Unterwerkzeug und zum Herstellen des Durchbruchs mittels des Stempels, und
- Füllen der Spritzgusskavität mit einem spritzfähigen Kunststoff.

Die technischen Effekte und Vorteile, die sich mit dem vorschlagsgemäßen Verfahren erreichen lassen, entsprechen denjenigen, die für die vorschlagsgemäße Vorrichtung erörtert worden sind. Zusammenfassend sei darauf hingewiesen, dass dadurch, dass der Durchbruch erst dann gefertigt wird, wenn der Rohling des Formpressteils bereits in die Vorrichtung eingelegt und teilweise geformt worden ist, das Formpressteil nicht mit der bei bekannten Verfahren notwendigen Präzision innerhalb der Vorrichtung positioniert werden muss, um die Funktionselemente an das Formpressteil anzuspritzen oder zu hinterspritzen. Im Rahmen dieser Anmeldung soll unter Anspritzen verstanden werden, dass die Spritzgusskavität so ausgestaltet und gefüllt wird, dass die Funktionselemente nur über die Grenzfläche des Durchbruchs mit dem Formspritzteil verbunden werden. Beim Hinterspritzen ist die Spritzgusskavität so ausgestaltet, dass die Funktionselemente auch über zur Grenzfläche benachbarte Flächen mit dem übrigen Formpressteil verbunden werden.

Das Verfahren wird durch folgende Schritte weitergebildet:
- Betätigen der Verriegelungseinrichtung derart, dass der Stempelabschnitt vom Aufnahmeabschnitt trennbar ist,
- Trennen des Stempelabschnitts vom Aufnahmeabschnitt durch Bewegen des Oberwerkzeugs weg vom Unterwerkzeug, durch Bewegen des Unterwerkzeugs weg vom Oberwerkzeug oder durch Bewegen des Oberwerkzeugs und des Unterwerkzeugs voneinander weg, so dass ein zweiter Zwischenraum zwischen dem Stempelabschnitt und dem Aufnahmeabschnitt gebildet wird, und
- Entformen des fertigen Formpressteils von der Vorrichtung.

Durch eine entsprechende Betätigung der Verriegelungseinrichtung ist es möglich, den Stempelabschnitt und den Aufnahmeabschnitt des Stempels wahlweise miteinander zu verbinden und zu trennen. Wie eingangs erwähnt, befindet sich die Spritzgusskavität zwischen dem Aufnahmeabschnitt und dem Stempelabschnitt. Folglich wird das fertige Formpressteil, welches die angespritzten oder hinterspritzten Funktionselemente aufweist, dadurch entformt und aus der Vorrichtung entnommen, dass der Stempelabschnitt und der Aufnahmeabschnitt voneinander weg bewegt werden und ein zweiter Zwischenraum geschaffen wird, der groß genug ist, um das fertige Formpressteil ohne Beschädigungen aus der Vorrichtung zu entnehmen.

Das Verfahren wird dadurch weitergebildet, dass beim Schritt des Trennens des Stempelabschnitts vom Aufnahmeabschnitt der Riegel betätigt wird, um den Stempelabschnitt am Oberwerkzeug oder am Unterwerkzeug zu fixieren. Hierdurch wird sichergestellt, dass der Stempelabschnitt nicht unkontrolliert am Aufnahmeabschnitt hängen bleibt.

Das Verfahren wird durch folgende Schritte weitergebildet:
- Aufeinander zu Bewegen des Oberwerkzeugs und des Unterwerkzeugs derart, dass der Stempelabschnitt mit dem Aufnahmeabschnitt verbindbar ist,
- Verbinden des Stempelabschnitts mit dem Aufnahmeabschnitt durch Betätigen der Verriegelungseinrichtung,
- Bewegen des Oberwerkzeugs und des Unterwerkzeugs in eine Position, in welche sie einen dritten Zwischenraum bilden, und
- Auswerfen von beim Bereitstellen des Durchbruchs anfallenden Abfallstücken aus der Vorrichtung mittels einer Auswurfeinrichtung.

Da der Durchbruch erst dann erzeugt wird, wenn der Rohling des Formpressteils in die Vorrichtung eingelegt ist, befindet sich das entsprechende, beim Fertigen des Durchbruchs anfallende Abfallstück in der Vorrichtung und muss entfernt werden, um den weiteren Betrieb der Vorrichtung zu gewährleisten. Die Abfallstücke können zwar manuell entnommen werden, allerdings ist das Abfallstück je nach Form des Formpressteils schwer zugänglich. Mit der Auswurfeinrichtung kann das Auswerfen automatisiert oder zumindest deutlich vereinfacht werden, so dass die zum Auswerfen des Abfallstücks benötigte Zeit gering gehalten wird. Hierdurch kann die Vorrichtung gut ausgelastet und wirtschaftlich betrieben werden.

Beispielhafte Ausführungsformen der Erfindung werden im Folgenden unter Bezugnahme auf die beigefügten Zeichnungen näher erläutert. Es zeigen
- Figuren 1 bis 11: ein Ausführungsbeispiel einer erfindungsgemäßen Vorrichtung zum Herstellen eines Formpressteils in verschiedenen Betriebszuständen, jeweils anhand einer prinzipiellen Schnittdarstellung, und
- Figur 12: ein Formpressteil, welches mit der erfindungsgemäßen Vorrichtung gefertigt werden kann.

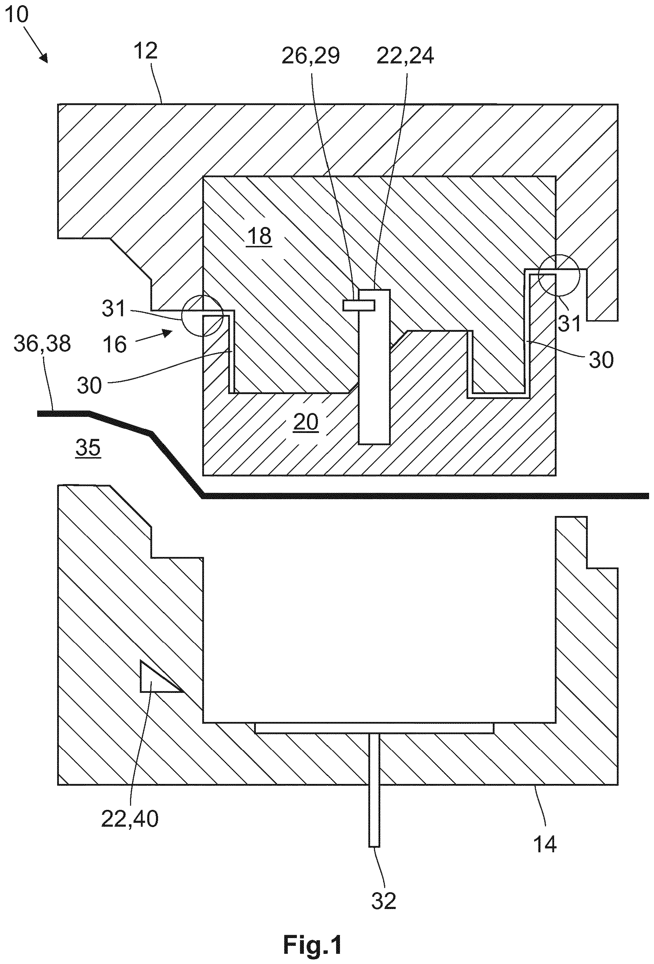

In Figur 1 ist eine erfindungsgemäße Vorrichtung 10 gemäß einem Ausführungsbeispiel in einem Ausgangszustand gezeigt. Die Vorrichtung 10 weist ein Oberwerkzeug 12 und ein Unterwerkzeug 14 auf, welche mittels einer hier nicht dargestellten Bewegungseinrichtung aufeinander zu und voneinander weg bewegt werden können. Weiterhin weist die Vorrichtung 10 einen Stempel 16 auf, der einen Aufnahmeabschnitt 18 und einen Stempelabschnitt 20 aufweist. Im dargestellten Ausführungsbeispiel ist der Aufnahmeabschnitt 18 als separates Bauteil ausgeführt und auf nicht näher dargestellte Weise lösbar mit dem Oberwerkzeug 12 verbunden. Alternativ kann der Aufnahmeabschnitt 18 integral mit dem Oberwerkzeug 12 oder dem Unterwerkzeug 14 ausgebildet sein. Der Aufnahmeabschnitt 18 und der Stempelabschnitt 20 sind mittels einer Verriegelungseinrichtung 22 so miteinander verbunden, dass sie durch eine entsprechende Betätigung der Verriegelungseinrichtung 22 und des Oberwerkzeugs 12 oder des Unterwerkzeugs 14 wahlweise gemeinsam bewegt oder voneinander getrennt werden können. Hierzu weist die Verriegelungseinrichtung 22 einen zentralen Zylinder 24 auf, der an einem seiner Enden mit einem oberen Verriegelungsabschnitt 26 ausgestattet ist, der je nach Stellung des Zylinders 24 seitlich vorsteht und dann formschlüssig in eine entsprechende Vertiefung 29 des Aufnahmeabschnitts 18 eingreift. An dem ersten Verriegelungsabschnitt 26 gegenüberliegenden Ende ist der Zylinder 24 fest mit dem Stempelabschnitt 20 verbunden, beispielsweise durch Verschrauben oder Schrumpfen.

Nicht dargestellt ist der Fall, in welchem der Zylinder 24 einen unteren Verriegelungsabschnitt aufweist, der in eine entsprechende Vertiefung des Stempelabschnitts 20 eingreift. In diesem Fall ist der Zylinder 24 auf die beschriebene Weise fest mit dem Aufnahmeabschnitt 18 verbunden. Andere Ausführungen der Verriegelungseinrichtung 22 sind denkbar.

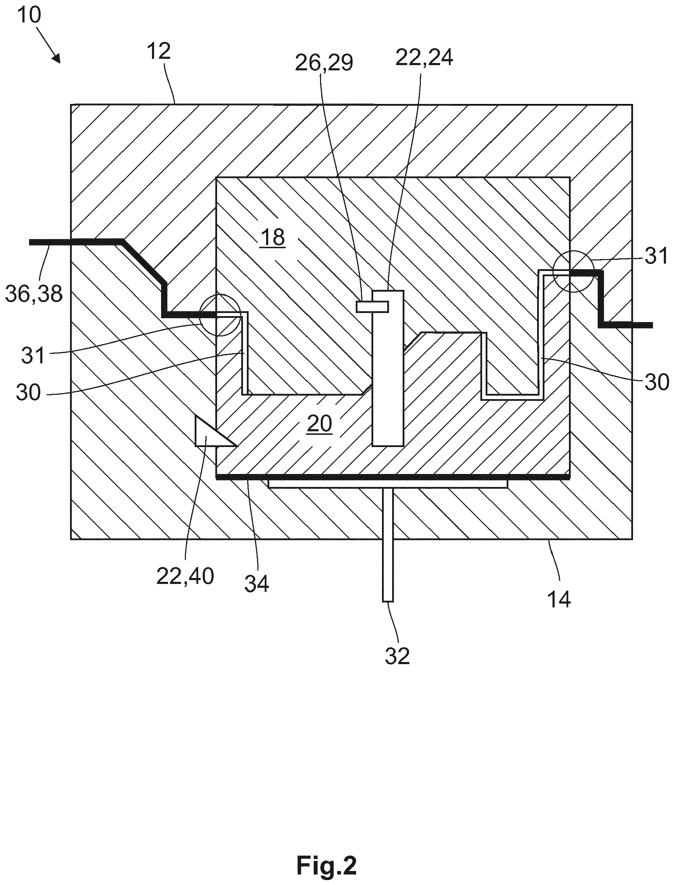

Sind der Aufnahmeabschnitt 18 und der Stempelabschnitt 20 miteinander verbunden, so wird eine Spritzgusskavität 30 gebildet, in welche über nicht dargestellte Kanäle spritzgussfähiger Kunststoff eingebracht werden kann. Die Spritzgusskavität 30 weist eine oder mehrere seitliche Öffnungen 31 auf, die so angeordnet sind, dass sie vom unmittelbar angrenzenden unteren Ende des Oberwerkzeugs 12 und dem unmittelbar angrenzenden oberen Ende des Unterwerkzeugs 14 umschlossen werden, wenn die beiden Werkzeuge 12, 14 maximal weit aufeinander zu bewegt worden sind (siehe Figuren 1 und 2). Hierdurch kann der Kunststoff mit dem Rohling 36 in Kontakt treten.

Weiterhin weist die Vorrichtung 10 eine Auswurfeinrichtung 32 auf, mit welcher Abfallstücke 34 (Figur 2) aus der Vorrichtung 10 entfernt werden können.

In Figur 1 sind der Aufnahmeabschnitt 18 und der Stempelabschnitt 20 durch eine entsprechende Betätigung der Verriegelungseinrichtung 22 miteinander verbunden. Ferner ist das Oberwerkzeug 12 zusammen mit dem Aufnahmeabschnitt 18 und dem Stempelabschnitt 20 weg vom Unterwerkzeug 14 in eine Position bewegt worden, in welcher ein erster Zwischenraum 35 zwischen dem Oberwerkzeug 12 mit dem Stempel 16 und dem Unterwerkzeug 14 gebildet wird. Der erste Zwischenraum 35 ist dabei so bemessen, dass ein Rohling 36 eines Formpressteils 38 problemlos in den ersten Zwischenraum 35 eingebracht und zwischen dem Oberwerkzeug 12 und dem Unterwerkzeug 14 platziert werden kann. Der Rohling 36 kann insbesondere Matten aus NFPP umfassen.

Nachdem der Rohling 36 in die Vorrichtung 10 eingebracht worden ist, werden das Oberwerkzeug 12 und das Unterwerkzeug 14 aufeinander zu bewegt (Figur 2). Da der Stempel 16 mit seiner Unterseite deutlich über das Oberwerkzeug 12 vorsteht, kommt zunächst der Rohling 36 mit dem Stempelabschnitt 20 des Stempels 16 in Kontakt, wodurch ein Durchbruch in den Rohling 36 gestanzt wird. Hierbei wird ein entsprechend geformtes Abfallstück 34 erzeugt und vor dem Stempel hergeschoben. Anschließend kommen Oberwerkzeug 12 und das Unterwerkzeug 14 derart mit dem Formpressteil 38 in Kontakt, dass der Rohling 36 entsprechend umgeformt wird. Das Abfallstück 34 befindet sich nun zwischen dem Stempelabschnitt 20 und dem Unterwerkzeug 14.

Die Verriegelungseinrichtung 22 weist einen Riegel 40 auf, welcher den Stempelabschnitt 20 mit dem Unterwerkzeug 14 verbindet. Sobald das Oberwerkzeug 12 und das Unterwerkzeug 14 maximal weit aufeinander zu bewegt worden sind, wird der Riegel 40 vorgeschoben, so dass der Stempelabschnitt 20 am Unterwerkzeug 14 befestigt ist. Der Riegel 40 ist nicht zwingend notwendig, sondern dient zur zusätzlichen Stabilisierung des Stempelabschnitts 20 am Unterwerkzeug 14.

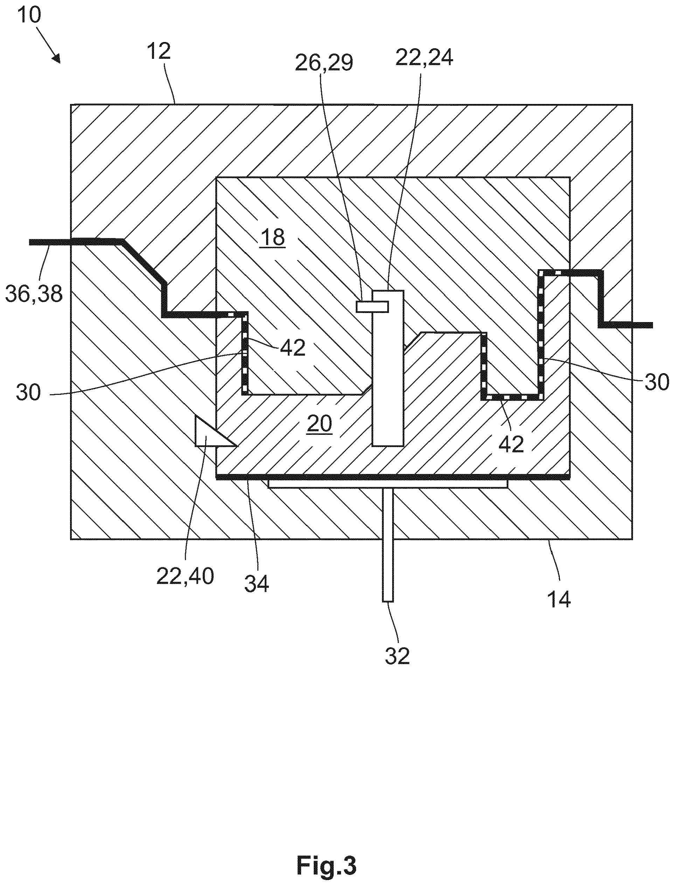

Wie in Figur 3 dargestellt, wird die Spritzgusskavität 30 nun mit einem spritzgussfähigen Kunststoff gefüllt und ein entsprechend ausgebildetes Funktionselement 42 an den umgeformten Rohling 36 und insbesondere an die vom Durchbruch gebildete Grenzfläche angespritzt.

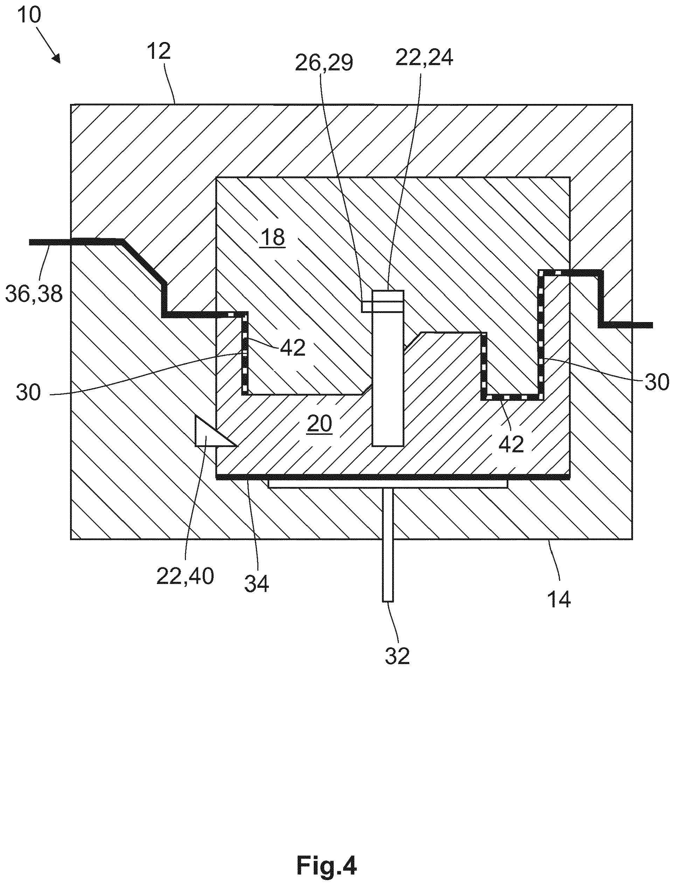

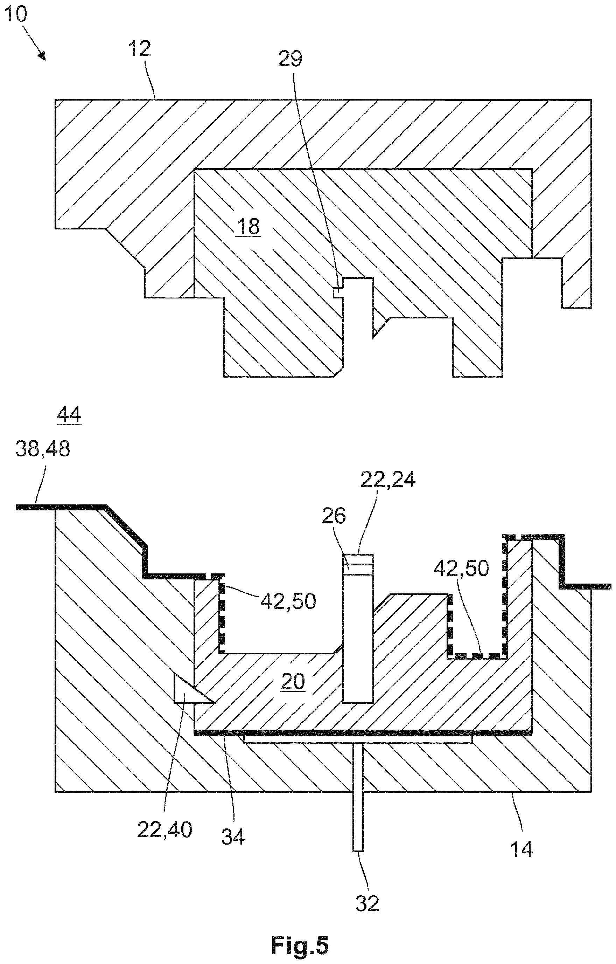

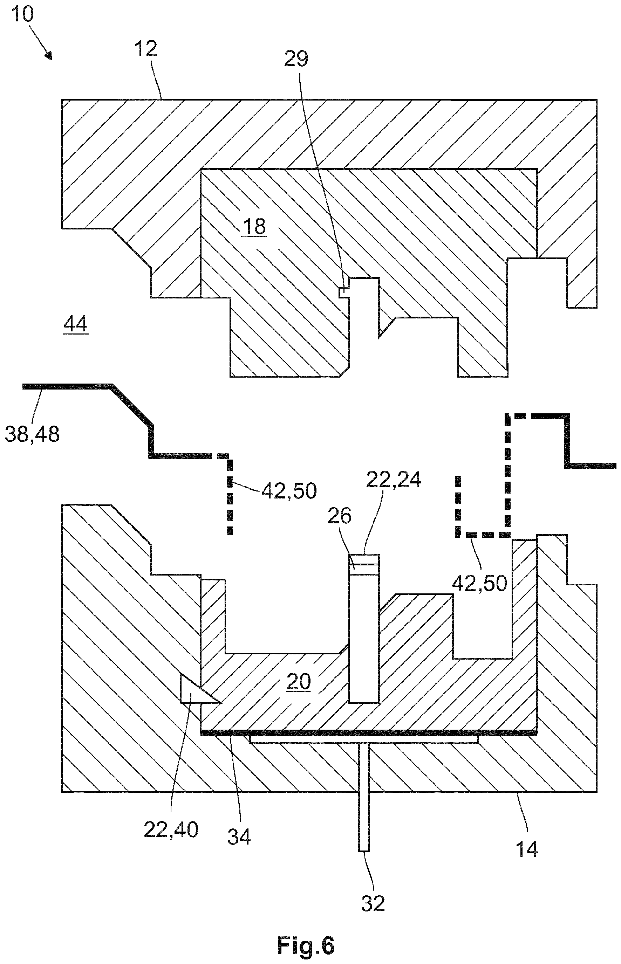

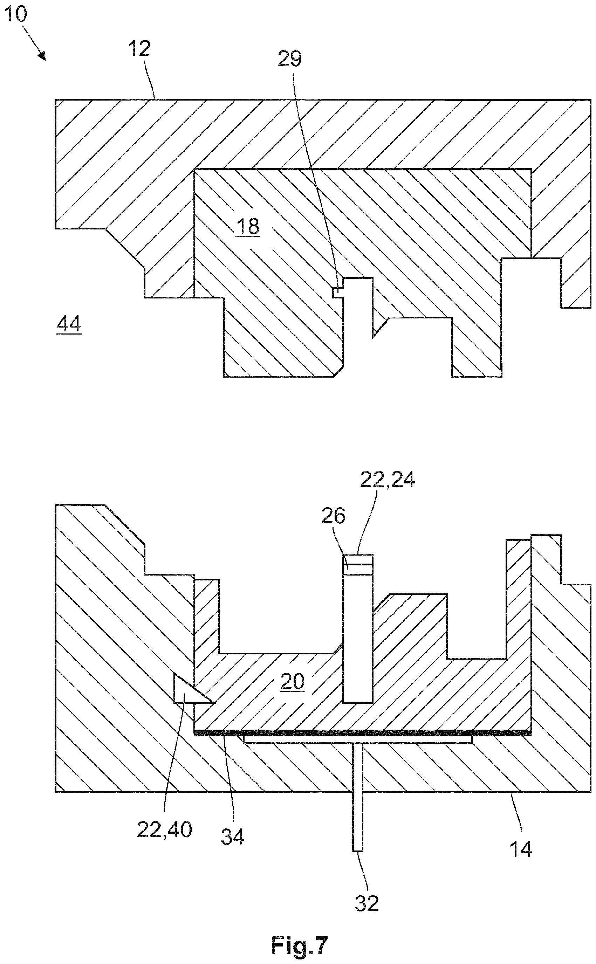

Der Zylinder 24 der Verriegelungseinrichtung 22 wird nun so bewegt, dass der obere Verriegelungsabschnitt 26 nicht mehr in die Vertiefung des Aufnahmeabschnitts 18 eingreift (Figur 4). Sobald der Kunststoff in der Spritzgusskavität 30 ausgehärtet ist, wird das Oberwerkzeug 12 zusammen mit dem Aufnahmeabschnitt 18 weg vom Unterwerkzeug 14 bewegt, so dass nun ein zweiter Zwischenraum 44 zwischen dem Oberwerkzeug 12 mit dem Aufnahmeabschnitt 18 und dem Unterwerkstück mit dem Stempelabschnitt 20 entsteht (Figur 5). Der Riegel 40 sorgt dafür, dass sich der Stempelabschnitt 20 nicht relativ zum Unterwerkzeug 14 bewegt. Das nun fertige Formpressteil 38 kann nun aus der Vorrichtung 10 entnommen werden (Figuren 6 und 7), welches folglich einen ersten Abschnitt 48, der von den NFPP-Matten, und einen zweiten Abschnitt 50, der von den gespritzten Funktionselementen 42 gebildet wird, aufweist.

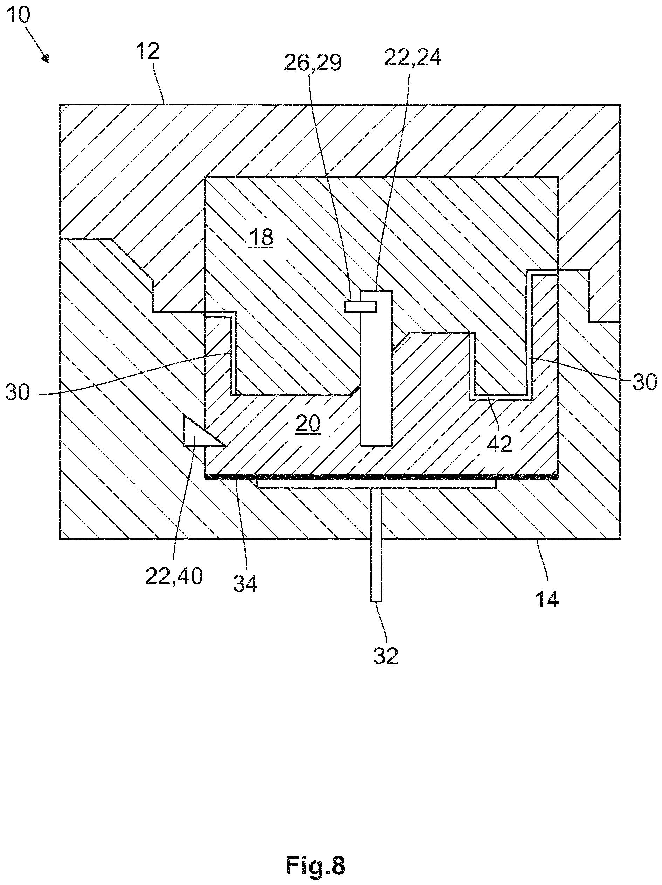

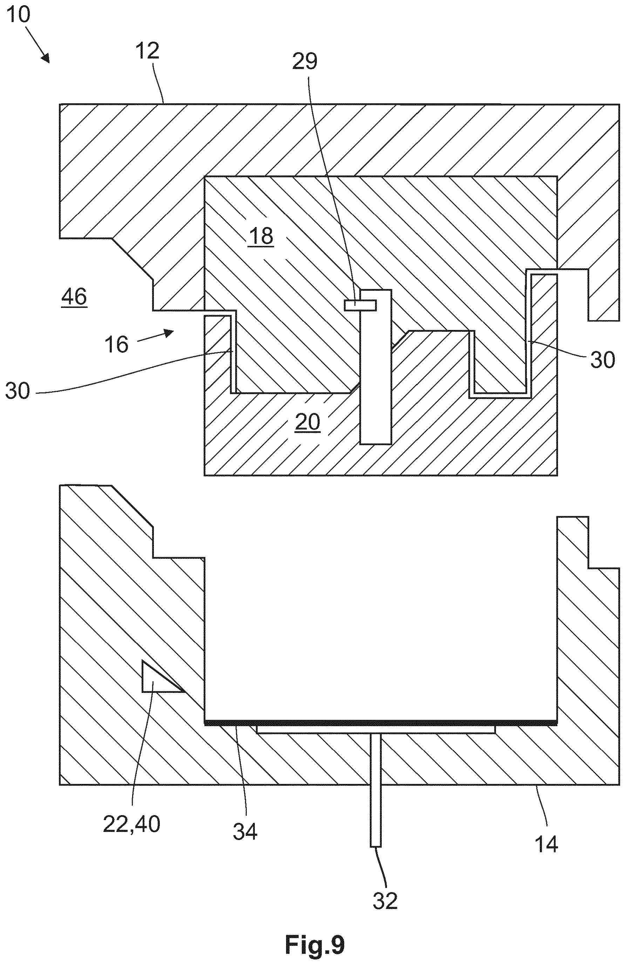

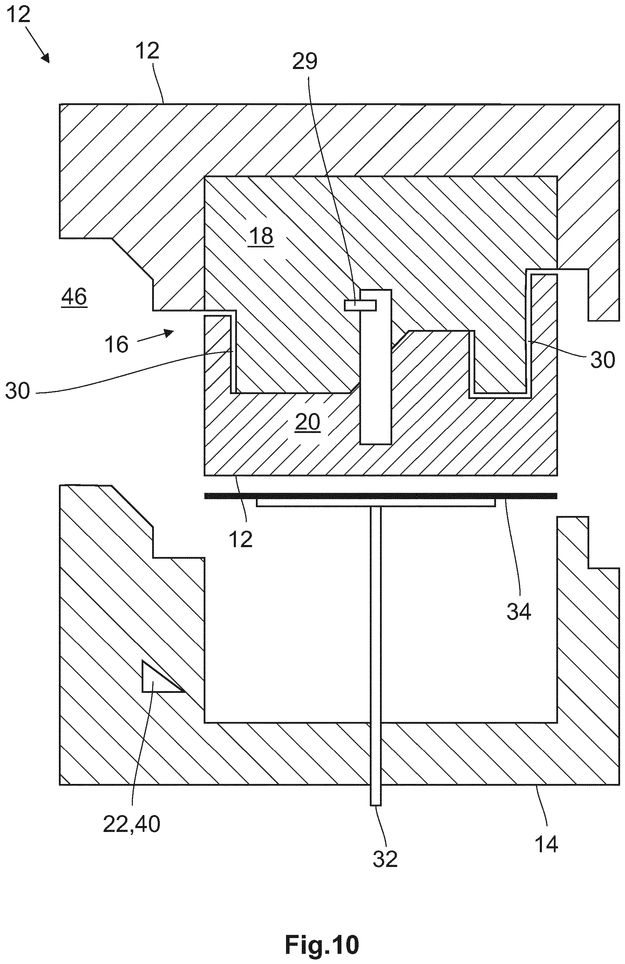

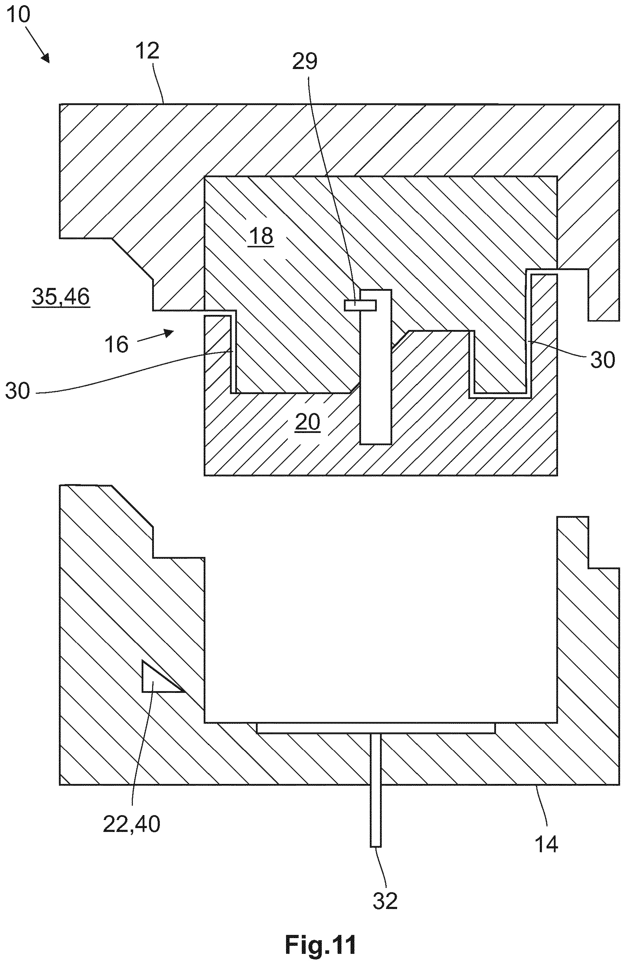

Das Abfallstück 34, welches beim Fertigen des Durchbruchs entstanden ist und sich zwischen dem Stempelabschnitt 20 und dem Unterwerkzeug 14 befindet, muss aus der Vorrichtung 10 entfernt werden, bevor ein weiteres Formpressteil 38 gefertigt werden kann. Hierzu wird zunächst das Oberwerkzeug 12 wieder auf das Unterwerkzeug 14 zu bewegt und die Verriegelungseinrichtung 22 so betätigt, dass der Stempelabschnitt 20 am Aufnahmeabschnitt 18 befestigt ist (siehe Figur 8). Anschließend wird das Oberwerkzeug 12 zusammen mit dem Stempelabschnitt 20 und mit dem Aufnahmeabschnitt 18 weg vom Unterwerkzeug 14 bewegt, so dass ein dritter Zwischenraum 46 zwischen dem Oberwerkzeug 12 mit dem Stempelabschnitt 20 und dem Aufnahmeabschnitt 18 und dem Unterwerkzeug 14 entsteht (Figur 9), der dem ersten Zwischenraum 35 (Figur 1) gleicht. Die Auswurfeinrichtung 32 ist schieberförmig aufgebaut, so dass das Abfallstück 34 aus dem Unterwerkzeug 14 herausgeschoben werden kann, wozu die Auswurfeinrichtung 32 aus dem Unterwerkzeug 14 ausgefahren wird, so dass das Abfallstück 34 aus der Vorrichtung 10 entnommen werden kann (Figur 10). Die Auswurfeinrichtung 32 wird anschließend wieder eingefahren (siehe Figur 11). Nun kann ein neues Formpressteil 38 in die Vorrichtung 10 eingelegt und der oben beschriebenen Schritte erneut durchgeführt werden.

Grundsätzlich kann die dargestellte Vorrichtung 10 auch um 180° gedreht werden, so dass das Unterwerkzeug 14 oberhalb des Oberwerkzeugs 12 angeordnet ist. In diesem Fall ist der Riegel 40 zwingend notwendig, um ein unkontrolliertes Herausfallen des Stempelabschnitts 20 aus dem Unterwerkzeug 14 zu verhindern. Die Auswurfeinrichtung 32 ist dann ebenfalls oberhalb des Oberwerkzeugs 12 angeordnet. Denkbar ist es auch, die dargestellte Vorrichtung 10 um 90° zu drehen. In diesem Fall führen die beweglichen Teile der Vorrichtung 10 eine horizontal gerichtete Bewegung aus.

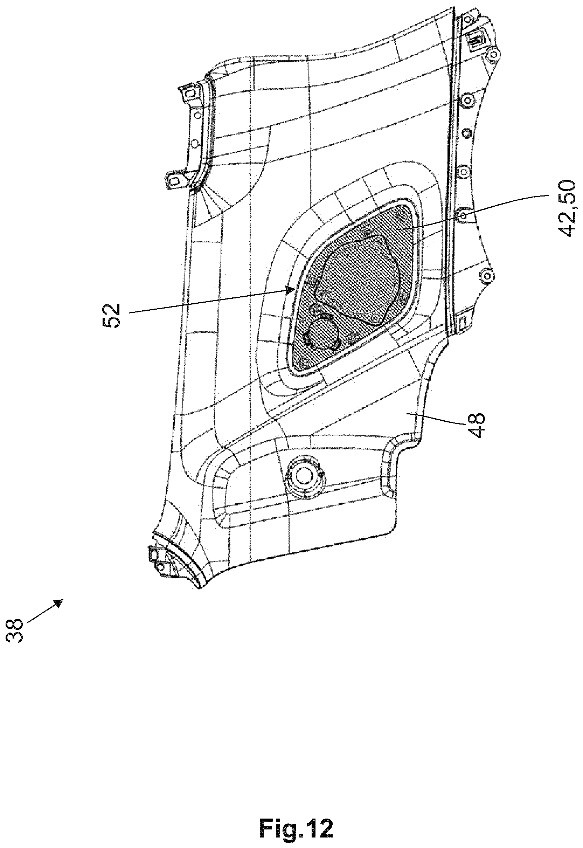

In Figur 12 ist ein Ausführungsbeispiel des Formpressteils 38, welches mit der erfindungsgemäßen Vorrichtung 10 hergestellt worden ist, anhand einer Draufsicht gezeigt. Man erkennt, dass das Formpressteil 38 den ersten Abschnitt 48 aufweist, der von NFPP-Matten gebildet wird, und einen Durchbruch 52 umfasst, der in Figur 12 schraffiert dargestellt ist. Der zweite Abschnitt 50, der von den Funktionselementen 42 gebildet wird, ist im Durchbruch 52 angeordnet und an die vom Durchbruch 52 gebildeten Grenzflächen angespritzt. An diesen Grenzflächen sind die Funktionselemente 42 mit dem ersten Abschnitt 48 verbunden.

### Bezugszeichenliste

- 10: Vorrichtung
- 12: Oberwerkzeug
- 14: Unterwerkzeug
- 16: Stempel
- 18: Aufnahmeabschnitt
- 20: Stempelabschnitt
- 22: Verriegelungseinrichtung
- 24: Zylinder
- 26: oberer Verriegelungsabschnitt
- 29: Vertiefung
- 30: Spritzgusskavität
- 31: seitliche Öffnungen
- 32: Auswurfeinrichtung
- 34: Abfallstück
- 35: erster Zwischenraum
- 36: Rohling
- 38: Formpressteil
- 40: Riegel
- 42: Funktionselement
- 44: zweiter Zwischenraum
- 46: dritter Zwischenraum
- 48: erster Abschnitt
- 50: zweiter Abschnitt
- 52: Durchbruch

## Patentansprüche

1. Vorrichtung zum Herstellen eines Formpressteils (38), welches mindestens einen Durchbruch aufweist, umfassend
- ein Oberwerkzeug (12),
- ein Unterwerkzeug (14), wobei
- das Oberwerkzeug (12) relativ zum Unterwerkzeug (14), das Unterwerkzeug (14) relativ zum Oberwerkzeug (12) oder das Oberwerkzeug (12) und das Unterwerkzeug (14) relativ zueinander bewegbar sind, um das Formpressteil (38) in die gewünschte Form zu bringen,
- das Oberwerkzeug (12) oder das Unterwerkzeug (14) einen Stempel (16) zum Bereitstellen des Durchbruchs des Formpressteils (38) bildet und der Stempel (16) einen Aufnahmeabschnitt (18) und einen Stempelabschnitt (20) umfasst, und **dadurch gekennzeichnet, dass**
- der Stempelabschnitt (20) wahlweise mit einer Verriegelungseinrichtung (22) am Oberwerkzeug (12) oder am Unterwerkzeug (14) befestigbar ist, so dass der Stempelabschnitt (20) gemeinsam mit dem Oberwerkzeug (12) oder dem Unterwerkzeug (14) bewegbar oder von diesen trennbar ist und der Stempelabschnitt (20) mit dem Aufnahmeabschnitt (18) eine Spritzgusskavität (30) bildet, wenn der Stempelabschnitt (20) am Aufnahmeabschnitt (18) befestigt ist.

2. Vorrichtung nach Anspruch 1,
**dadurch gekennzeichnet, dass** der Aufnahmeabschnitt (18) vom Oberwerkzeug (12) oder vom Unterwerkzeug (14) gebildet wird.

3. Vorrichtung nach Anspruch 1,
**dadurch gekennzeichnet, dass** der Aufnahmeabschnitt (18) vom Oberwerkzeug (12) oder vom Unterwerkzeug (14) lösbar ausgeführt ist.

4. Vorrichtung nach einem der vorherigen Ansprüche,
**dadurch gekennzeichnet, dass** die Vorrichtung eine Auswurfeinrichtung (32) zum Auswerfen von beim Bereitstellen des Durchbruchs anfallenden Abfallstücken (34) aufweist.

5. Vorrichtung nach einem der vorherigen Ansprüche,
**dadurch gekennzeichnet, dass** das Oberwerkzeug (12) oder das Unterwerkzeug (14) einen Riegel (40) zum Fixieren des Stempelabschnitts (20) aufweist.

6. Verfahren zum Herstellen eines Formpressteils (38), welches mindestens einen Durchbruch aufweist, mit einer Vorrichtung nach einem der vorherigen Ansprüche, umfassend folgende Schritte:
- Aufeinander zu Bewegen des Oberwerkzeugs (12) und des Unterwerkzeugs (14) derart, dass der Stempelabschnitt (20) am Aufnahmeabschnitt (18) befestigbar ist,
- Betätigen der Verriegelungseinrichtung (22) derart, dass der Stempelabschnitt (20) am Aufnahmeabschnitt (18) befestigt ist,
- Bewegen des Oberwerkzeugs (12) und/oder des Unterwerkzeugs (14) in eine Position, in welche sie einen ersten Zwischenraum (35) bilden,
- Einlegen eines Rohlings (36) des Formpressteils (38) in den ersten Zwischenraum (35),
- Aufeinander zu Bewegen des Oberwerkzeugs (12) und des Unterwerkzeugs (14) zum Umformen des Rohlings (36) mit dem Oberwerkzeug (12) und dem Unterwerkzeug (14) und zum Herstellen des Durchbruchs mittels des Stempels (16), und
- Füllen der Spritzgusskavität (30) mit einem spritzfähigen Kunststoff.

7. Verfahren nach Anspruch 6, **gekennzeichnet durch** folgende Schritte:
- Betätigen der Verriegelungseinrichtung (22) derart, dass der Stempelabschnitt (20) vom Aufnahmeabschnitt (18) trennbar ist,
- Trennen des Stempelabschnitts (20) vom Aufnahmeabschnitt (18) durch Bewegen des Oberwerkzeugs (12) weg vom Unterwerkzeug (14), durch Bewegen des Unterwerkzeugs (14) weg vom Oberwerkzeug (12) oder durch Bewegen des Oberwerkzeugs (12) und des Unterwerkzeugs (14) voneinander weg, so dass ein zweiter Zwischenraum (44) zwischen dem Stempelabschnitt (20) und dem Aufnahmeabschnitt (18) gebildet wird, und
- Entformen des fertigen Formpressteils (38) von der Vorrichtung.

8. Verfahren nach Anspruch 7, **dadurch gekennzeichnet, dass** beim Schritt des Trennens des Stempelabschnitts (20) vom Aufnahmeabschnitt (18) der Riegel (40) betätigt wird, um den Stempelabschnitt (20) am Oberwerkzeug (12) oder am Unterwerkzeug (14) zu fixieren.

9. Verfahren nach einem der Ansprüche 7 oder 8, **gekennzeichnet durch** folgende Schritte:
- Aufeinander zu Bewegen des Oberwerkzeugs (12) und des Unterwerkzeugs (14) derart, dass der Stempelabschnitt (20) mit dem Aufnahmeabschnitt (18) verbindbar ist,
- Verbinden des Stempelabschnitts (20) mit dem Aufnahmeabschnitt (18) durch Betätigen der Verriegelungseinrichtung (22),
- Bewegen des Oberwerkzeugs (12) und des Unterwerkzeugs (14) in eine Position, in welche sie einen dritten Zwischenraum (46) bilden, und
- Auswerfen von beim Bereitstellen des Durchbruchs anfallenden Abfallstücken (34) aus der Vorrichtung mittels einer Auswurfeinrichtung (32).

## Claims

1. An apparatus for producing a press-moulded part (38) that has at least one aperture, comprising
- a top tool (12),
- a bottom tool (14), wherein
- the top tool (12) can be moved relative to the bottom tool (14), the bottom tool (14) can be moved relative to the top tool (12), or the top tool (12) can be moved relative to the bottom tool (14), in order to bring the press-moulded part (38) into its desired shape,
- the top tool (12) or the bottom tool (14) forms a punch (16) for providing the aperture of the press-moulded part (38), and the punch (16) comprises a receiving section (18) and a punching section (20), and **characterised in that**
- the punching section (20) can be selectively fixed to the top tool (12) or the bottom tool (14) using a locking device (22), so that the punching section (20) can be moved together with the top tool (12) or the bottom tool (14) or can be separated therefrom, and the punching section (20) forms an injection moulding cavity (30) with the receiving section (18) when the punching section (20) is fixed to the receiving section (18).

2. The apparatus as claimed in claim 1,
**characterised in that** the receiving section (18) is formed by the top tool (12) or by the bottom tool (14).

3. The apparatus as claimed in claim 1,
**characterised in that** the receiving section (18) is designed to be detachable from the top tool (12) or the bottom tool (14).

4. The apparatus as claimed in any one of the preceding claims,
**characterised in that** the apparatus has an ejection device (32) for ejecting waste pieces (34) that occur whilst the aperture is being provided.

5. The apparatus as claimed in any one of the preceding claims, **characterised in that** the top tool (12) or the bottom tool (14) has a lock (40) for fixing the punching section (20).

6. A method for producing a press-moulding part (38) that has at least one aperture using an apparatus as claimed in any one of the preceding claims, comprising the following steps:
- moving the top tool (12) and the bottom tool (14) towards each other in such a way that the punching section (20) can be fixed to the receiving section (18),
- operating the locking device (22) in such a way that the punching section (20) is fixed to the receiving section (18),
- moving the top tool (12) and/or the bottom tool (14) into a position in which they form a first intermediate space (35),
- inserting a blank (36) of the press-moulded part (38) into the first intermediate space (35),
- moving the top tool (12) and the bottom tool (14) towards each other for forming the blank (36) using the top tool (12) and the bottom tool (14) and for producing the aperture by means of the punch (16), and
- filling the injection moulding cavity (30) with an injectable plastic.

7. The method as claimed in claim 6, **characterised by** the following steps:
- operating the locking device (22) in such a way that the punching section (20) can be separated from the receiving section (18),
- separating the punching section (20) from the receiving section (18) by moving the top tool (12) away from the bottom tool (14), by moving the bottom tool (14) away from the top tool (12), or by moving the top tool (12) and the bottom tool (14) away from each other, so that a second intermediate space (44) is formed between the punching section (20) and the receiving section (18), and
- demoulding the finished press-moulded part (38) from the apparatus.

8. The method as claimed in claim 7, **characterised in that** during the step of separating the punching section (20) from the receiving section (18), the lock (40) is operated in order to fix the punching section (20) on the top tool (12) or the bottom tool (14).

9. The method as claimed in claim 7 or 8, **characterised by** the following steps:
- moving the top tool (12) and the bottom tool (14) towards each other in such a way that the punching section (20) can be connected to the receiving section (18),
- connecting the punching section (20) with the receiving section (18) by operating the locking device (22),
- moving the top tool (12) and the bottom tool (14) into a position in which they form a third intermediate space (46), and
- ejecting waste pieces (34) that occur whilst the aperture is being provided from the apparatus by means of an ejection device (32).

## Revendications

1. Dispositif de fabrication d'une pièce moulée par compression (38) ayant au moins une ouverture comprenant :
- un outil supérieur (12),
- un outil inférieur (14),
- l'outil supérieur (12) étant mobile par rapport à l'outil inférieur (14), l'outil inférieur (14) étant mobile par rapport à l'outil supérieur (12) ou l'outil supérieur (12) et l'outil inférieur (14) étant mobiles l'un par rapport à l'autre pour pouvoir conformer la pièce moulée par compression (38) sous la forme souhaitée,
- l'outil supérieur (12) ou l'outil inférieur (14) formant un poinçon (16) permettant d'obtenir l'ouverture de la pièce moulée par compression (38) et le poinçon (16) comportant un segment de réception (18) et un segment de poinçonnement (20),
**caractérisé en ce que**
- le segment de poinçonnement (20) peut sélectivement être fixé avec un dispositif de verrouillage (22) sur l'outil supérieur (12) ou sur l'outil inférieur (14) de sorte que ce segment de poinçonnement (20) soit susceptible d'être déplacé conjointement avec l'outil supérieur (12) ou avec l'outil inférieur (14) ou soit susceptible d'être séparé de ces outils, et le segment de poinçonnement (20) forme avec le segment de réception (18) une cavité de moulage par injection (30) lorsque le segment de poinçonnement (20) est fixé sur le segment de réception (18).

2. Dispositif conforme à la revendication 1,
**caractérisé en ce que**
le segment de réception (18) est formé par l'outil supérieur (12) ou par l'outil inférieur (14).

3. Dispositif conforme à la revendication 1,
**caractérisé en ce que**
le segment de réception (18) est amovible de façon à pouvoir être séparé de l'outil supérieur (12) ou de l'outil inférieur (14) .

4. Dispositif conforme à l'une des revendications précédentes,
**caractérisé en ce qu'**
il comporte un dispositif d'éjection (32) permettant d'éjecter des déchets (34) produits lors de la fabrication de l'ouverture.

5. Dispositif conforme à l'une des revendications précédentes,
**caractérisé en ce que**
l'outil supérieur (12) ou l'outil inférieur (14) comporte un loquet (40) permettant de fixer le segment de poinçonnement (20) .

6. Procédé de fabrication d'une pièce moulée par compression (38) ayant au moins une ouverture avec un dispositif conforme à l'une des revendications précédentes, comprenant les étapes suivantes consistant à :
- déplacer l'un par rapport à l'autre l'outil supérieur (12) et l'outil inférieur (14) de sorte que le segment de poinçonnement (20) puisse être fixé sur le segment de réception (18),
- actionner le dispositif de verrouillage (22) de sorte que le segment de poinçonnement (20) soit fixé sur le segment de réception (18),
- déplacer l'outil supérieur (12) et/ou l'outil inférieur (14) dans une position dans laquelle il(s) forme(nt) un premier volume intermédiaire (35),
- insérer une ébauche (36) de la pièce moulée par compression (38) dans le premier volume intermédiaire (35),
- déplacer l'un par rapport à l'autre l'outil supérieur (12) et l'outil inférieur (14) pour mettre en forme l'ébauche (36) avec l'outil supérieur (12) et l'outil inférieur (14) et pour obtenir l'ouverture au moyen du poinçon (16), et
- remplir la cavité de moulage par injection (30) avec un matériau synthétique injectable.

7. Procédé conforme à la revendication 6,
**caractérisé par** les étapes suivantes consistant à :
- actionner le dispositif de verrouillage (22) de sorte que le segment de poinçonnement (20) puisse être séparé du segment de réception (18),
- séparer le segment de poinçonnement (20) du segment de réception (18) par déplacement de l'outil supérieur (12) pour l'éloigner de l'outil inférieur (14), par déplacement de l'outil inférieur (14) pour l'éloigner de l'outil supérieur (12) ou par déplacement conjoint de l'outil supérieur (12) et de l'outil inférieur (14) pour les éloigner l'un de l'autre de façon à former un second volume intermédiaire (44) entre le segment de poinçonnement (20) et le segment de réception (18), et
- extraire la pièce moulée par compression finie (38) du dispositif.

8. Procédé conforme à la revendication 7,
**caractérisé en ce que**
lors de l' étape de séparation du segment de poinçonnement (20) du segment de réception (18) le verrou (40) est actionné pour fixer le segment de poinçonnement (20) sur l'outil supérieur (12) ou sur l'outil inférieur (14).

9. Procédé conforme à l'une des revendications 7 et 8,
**caractérisé par** les étapes suivantes consistant à :
- déplacer l'un par rapport à l'autre l'outil supérieur (12) et l'outil inférieur (14) de sorte que le segment de poinçonnement (20) puisse être relié au segment de réception (18),
- relier le segment de poinçonnement (20) au segment de réception (18) par actionnement du dispositif de verrouillage (22),
- déplacer l'outil supérieur (12) et l'outil inférieur (14) dans une position dans laquelle ils forment un troisième volume intermédiaire (46), et
- éjecter les déchets (34) obtenus lors de la formation de l'ouverture du dispositif au moyen d'un dispositif d'éjection (32) .
